Europäisches Patentamt

European Patent Office

Office européen des brevets

(11) Veröffentlichungsnummer : **0 057 840**
**B1**

(12) **EUROPÄISCHE PATENTSCHRIFT**

(45) Veröffentlichungstag der Patentschrift :
02.05.84

(21) Anmeldenummer : **82100432.2**

(22) Anmeldetag : **22.01.82**

(51) Int. Cl.³ : **H 04 M 19/08**, H 04 Q   3/00

(54) Teilnehmerschaltung.

(30) Priorität : 06.02.81 DE 3104138

(43) Veröffentlichungstag der Anmeldung :
**18.08.82 Patentblatt 82/33**

(45) Bekanntmachung des Hinweises auf die Patenterteilung : 02.05.84 Patentblatt 84/18

(84) Benannte Vertragsstaaten :
**DE FR GB IT NL SE**

(56) Entgegenhaltungen :
**DE-A- 2 850 905**
**FR-A- 2 442 557**

(73) Patentinhaber : **Felten & Guilleaume Fernmeldeanlagen GmbH**
**Thurn-und-Taxis-Strasse 10 Postfach 4943**
**D-8500 Nürnberg 10 (DE)**

(72) Erfinder : **Widder, Hans Georg**
**Jauerstrasse 181**
**D-8500 Nürnberg (DE)**
Erfinder : **Albers, Raymund**
**Südring 33**
**D-8501 Eckental (DE)**

(74) Vertreter : **Peuckert, Hermann**
**Philips Patentverwaltung GmbH Billstrasse 80 Postfach 10 51 49**
**D-2000 Hamburg 28 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Teilnehmerschaltung

Gegenstand der Erfindung ist eine Teilnehmerschaltung gemäß dem Oberbegriff des Anspruchs 1.

Eine solche Schaltungsanordnung ist beispielsweise aus der DE-A-28 50 905 bekannt. Hierbei ist sowohl in die a-Ader als auch in die b-Ader der Teilnehmerleitung je eine Konstantstromquelle gelegt, um zur Vermeidung erhöhten Nebensprechens symmetrische Dämpfungsbedingungen bezüglich der Sprechwechselspannungen zu erhalten. Bei der induktiven oder kapazitiven Einkopplung verhältnismäßig großer Längsspannungen in die Teilnehmerleitung, beispielsweise wenn parallel zur Teilnehmerleitung Überlandleitungen oder Bahnleitungen verlaufen, kann die Symmetrie für die Dämpfung der Sprechwechselspannungen, insbesondere bei hohen Anforderungen an die Nebensprechdämpfung, nicht mehr ausreichend sein, da diese Störspannungen einen zusätzlich im Rhythmus der Längsspannungsfrequenz fließenden Strom verursachen, wodurch die Wechselspannungssymmetrie vermindert wird. Da mit solchen Schaltungsanordnungen aber auch eine einfache Schleifendetektion — Schleife offen, Schleife geschlossen, Erdtaste betätigt — moglich ist, kann bei eingekoppelten Störspannungen die Störsicherheit dieser Schleifendetektion, auch bei möglicherweise noch befriedigender Nebensprechdämpfung, nicht mehr ausreichend sein.

Aufgabe der Erfindung ist es deshalb, bei einer Teilnehmerschaltung der eingangs genannten Art, die Störsicherheit der Schleifendetektion und die Wechselspannungssymmetrie zu erhöhen.

Eine erste Lösung dieser Aufgabe ist im Kennzeichenteil des Anspruchs 1, eine zweite Lösung im Kennzeichenteil des Anspruchs 2 beschrieben.

Vorteilhafte Ausgestaltungen sind den Unteransprüchen entnehmbar. Die Erfindung wird im folgenden anhand der in der Zeichnung dargestellten Ausführungsbeispiele näher erläutert.

Es zeigt :

Figur 1   ein Übersichtsschaltbild der ersten Lösung,

Figur 2   ein Übersichtsschaltbild der zweiten Lösung,

Figur 3   ein detailliertes Ausführungsbeispiel gemäß Fig. 1,

Figur 4   ein detailliertes Ausführungsbeispiel gemäß Fig. 2.

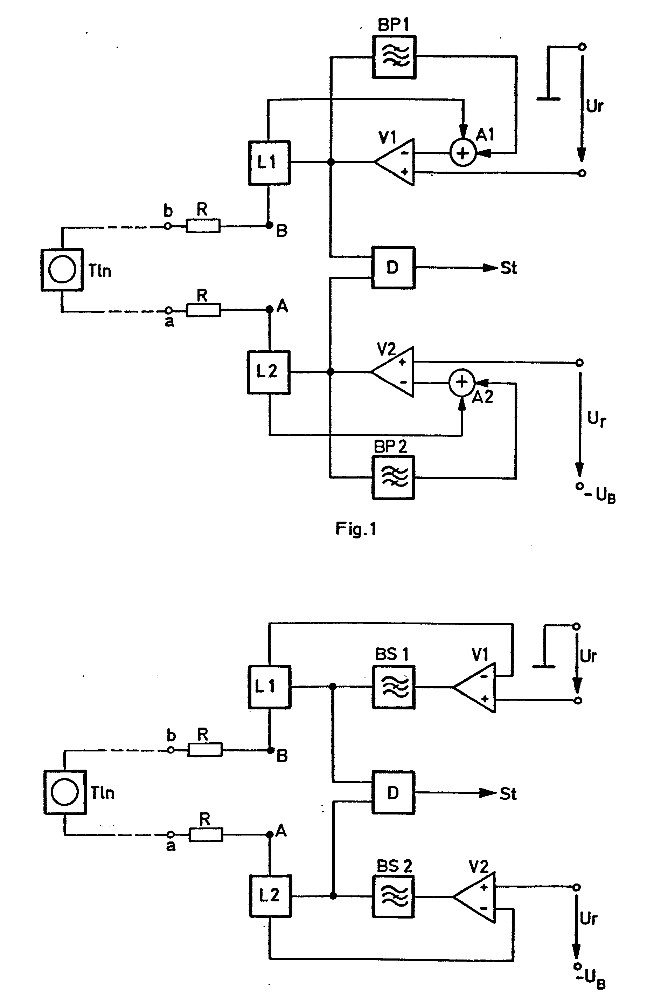

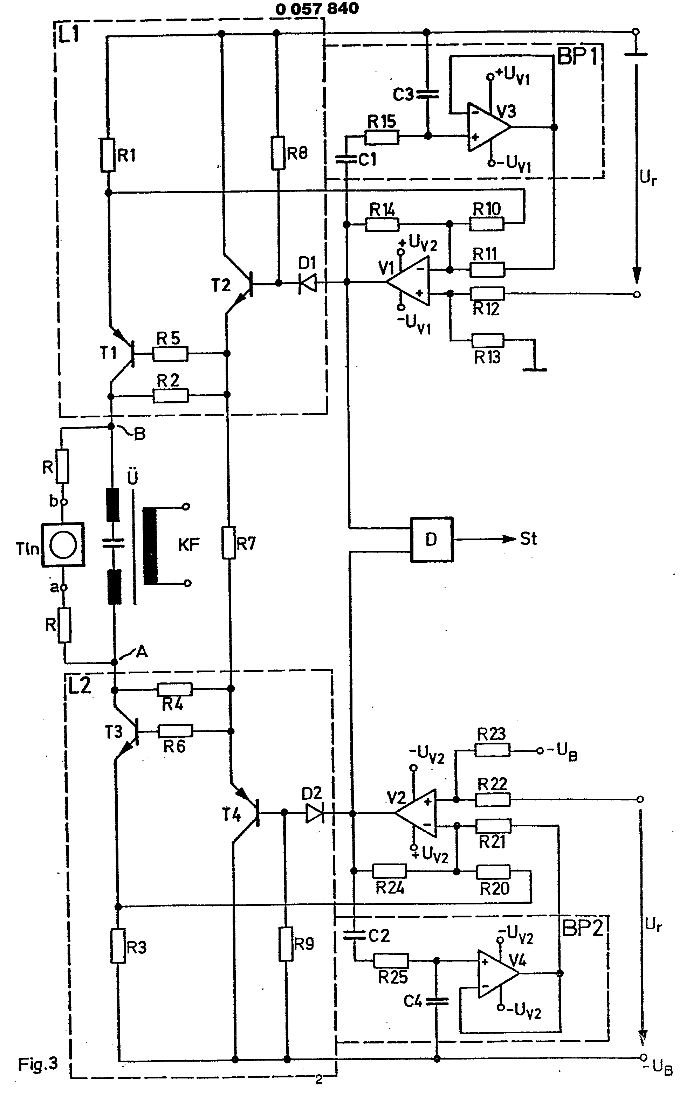

In Fig. 1 und 2 ist die Teilnehmerendeinrichtung Tln über die a-Ader und über die b-Ader mit der Teilnehmerschaltung der Vermittlungsstelle verbunden. Der Leitungswiderstand, der je nach Länge der Teilnehmerleitung unterschiedlich sein kann, ist durch die Widerstände R dargestellt. An die Anschlußklemmen A und B der Teilnehmerleitung sind je eine Konstantstromquelle, die aus dem Leitungsteil L1 bzw. L2 und dem sie steuernden Differenzverstärker V1 bzw. V2 besteht, angeschlossen. Hier nicht eingezeichnet ist die Verbindung des Leistungsteils L2 mit dem negativen Pol $-U_B$ der Batteriespannung und die Verbindung des Leistungsteils L1 mit dem positiven, geerdeten Pol der Batteriespannung. Der nicht invertierende Eingang des Differenzverstärkers V1 bzw. V2 liegt an der Referenzspannung $U_r$, deren am Eingang liegendes Potential um einen bestimmten Betrag negativer bzw. positiver als das Potential des geerdeten bzw. negativen Pols der Batteriespannung $U_B$ ist.

Gemäß Fig. 1 wird die aus dem Leistungsteil L1 bzw. L2 abgeleitete Regelgröße, der eine Störgröße überlagert sein kann, die beispielsweise von eingekoppelten Längsspannungen verursacht ist, dem ersten Eingang eines Addierglids A1 bzw. A2 zugeführt. Der Ausgang des Differenzverstärkers V1 bzw. V2 ist über den Bandpass BP1 bzw. BP2 mit dem zweiten Eingang von A1 bzw. A2 verbunden. Der Ausgang des Addierglids A1 bzw. A2 ist an den invertierenden Eingang des Differenzverstärkers V1 bzw. V2 geführt. Die Dimensionierung der Bandpässe BP1 und BP2 kann vom jeweiligen Einsatzfall abhängig sein, d. h. bei welchen Frequenzen die Störgröße überwiegend auftritt. Bei zur Teilnehmerleitung parallel verlaufenden Überlandleitungen ist die Frequenz der eingekoppelten Längsspannungen beispielsweise 50 Hz, bei Bahnleitungen 16 2/3 Hz. Die Bandpässe BP1 und BP2 können also so dimensioniert werden, daß sie für den Frequenzbereich 16 bis 50 Hz durchlässig sind. Unter Umständen kann es auch vorteilhaft sein, die obere Grenzfrequenz der Bandpässe höher zu legen, um beispielsweise auch die durch Phasenanschnittsteuerung bei Bahnen entstehenden höherfrequenten Störspannungen zu erfassen. Durch diese Anordnung tritt die Störgröße am Ausgang von V1 bzw. V2 nicht nehr auf, so daß die hier angeschlossene Detektionsschaltung D von der Störgröße praktisch nicht mehr beeinflußt wird und auch die Wechselspannungssymmetrie der gesamten Anordnung ausreichend verbessert wird.

In Fig. 2 ist ein Prinzipschaltbild der zweiten Lösung dargestellt. Hier wird die Regelgröße, die auch eine Störgröße enthalten kann, direkt dem invertierenden Eingang des Differenzverstärkers V1 bzw. V2 zugeführt. In den Ausgangskreis von V1 bzw. V2 ist eine Bandsperre BS1 bzw. BS2 gelegt. Hierbei sind diese Bandsperren so ausgelegt, daß der Frequenzbereich der Störgröße gesperrt wird. Für die Wahl des Frequenzbereiches dieser Bandsperren BS1 und BS2 gilt dasselbe wie für die Wahl des Frequenzbereichs der Bandpässe BP1 und BP2 in Fig. 1. An die Ausgänge der Bandsperren BS1 und BS2, wo die Störgröße nicht mehr auftritt, ist die Detektionsschaltung D angeschlossen.

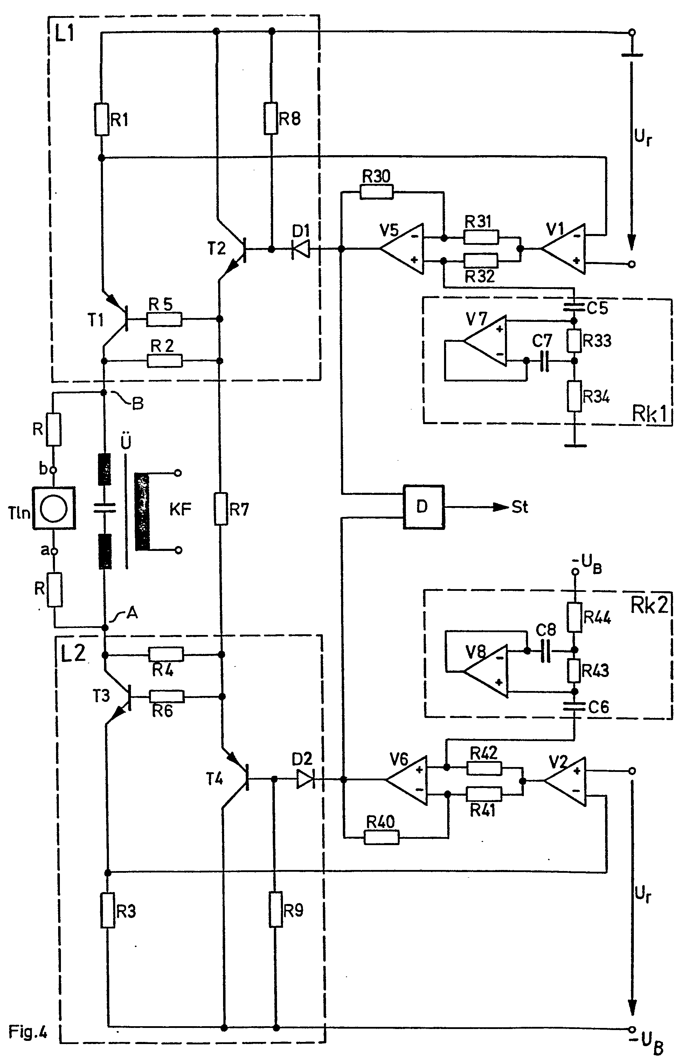

Die Fig. 3 bzw. 4 zeigt ein detailliertes Ausführungsbeispiel der Fig. 1 bzw. 2. Hierbei wurde in beiden Fällen für die Leistungsteile L1 und L2 dieselbe Ausführungsform gewählt. Die erfindungsgemäßen Lösungen sind aber nicht an diese spezielle Ausführungsform gebunden.

An die Anschlußklemmen A bzw. B der Teilnehmerleitung sind die Kollektoren der Speisetransistoren T1 bzw. T3 angeschlossen. Die Emitter der Speisetransistoren T1 bzw. T3 sind über die Widerstände R1 bzw. R3 mit dem positiven, geerdeten bzw. negativen Pol der Batteriespannung $U_B$ verbunden. Der Speisestrom. den die Transistoren T1 bzw. T3 liefern, hängt von der Beschaltung und den Kenndaten dieser Transistoren ab. Parallel zu T1 und R1 bzw. T3 und R3 liegt je ein Stromnebenpfad, der aus der Kollektor-Emitter-Strecke des Hilfstransistors T2 bzw. T4 und des Widerstands R2 bzw. R4 besteht. Der Emitter des Hilfstransistors T2 bzw. T4 ist außer mit dem Widerstand R2 bzw. R4 über einen Basisvorwiderstand R5 bzw. R6 mit der Basis des Speisetransistors T1 bzw. T3 verbunden. Außerdem stehen die beiden Emitter der Hilfstransistoren T2 und T4 über einen vorzugsweise hochohmigen Koppelwiderstand R7 miteinander in Verbindung. Die Basis von T2 bzw. T4 ist über den Widerstand R8 bzw. R9 mit dem positiven bzw. negativen Pol der Batteriespannung $U_B$ verbunden. Die Basis des Hilfstransistors T2 bzw. T4 wird vom Ausgang des hier als Operationsverstärker ausgebildeten Differenzverstärkers V1 bzw. V2 angesteuert.

Die zwischen dem Ausgang von V1 bzw. V2 und der Basis von T2 bzw. T4 eingefügte Diode D1 bzw. D2 dient zur Begrenzung des Kollektor-Basis-Stromes von T2 bzw. T4 bei offener Schleife.

An den beiden Anschlußklemmen A und B der Teilnehmerleitung liegt im Verbindungsfall über die Sekundärseite des Ankopplungsübertragers Ü die Sprechwechselspannung an. Die Sekundärseite des Übertragers Ü besteht aus zwei Wicklungen, die durch einen Kondensator getrennt sind, um diesen Weg für den Schleifengleichstrom zu sperren. Die Anschlüsse der Primärwicklung des Übertragers Ü führen zum Koppelfeld KF der Vermittlungsstelle.

In Fig. 3 besteht der Bandpass BP1 bzw. BP2 aus dem Operationsverstärker V3 bzw. V4, den Kapazitäten C1, C3 bzw. C2, C4 und dem Widerstand R15 bzw. R25. Der Differenzverstärker V1 bzw. V2 ist mit den Widerständen R10, R11, R12, R13, R14 bzw. R20, R21, R22, R23, R24 als Analogaddierer beschaltet. Über den Widerstand R10 bzw. R20 liegt der invertierende Eingang von V1 bzw. V2 am Emitter des Speisetransistors T1 bzw. T3 und somit über den vorzugsweise als niederohmigen Referenzwiderstand ausgeführten Widerstand R1 bzw. R3 am positiven bzw. negativen Pol der Batteriespannung $U_B$.

Der Ausgang von V3 bzw. V4, d. h. der Ausgang des Bandpasses BP1 bzw. BP2, wird über den Widerstand R11 bzw. R21 ebenfalls dem invertierenden Eingang des Differenzverstärkers V1 bzw. V2 zugeführt. Das bedeutet, die Störgröße wird über R11 bzw. R21 am invertierenden Eingang von V1 bzw. V2 zu der in der Regelgröße enthaltenden Störgröße gegenphasig addiert.

Durch das Widerstandsverhältnis R14/R10 bzw. R24/R20 wird die Verstärkung der Regelgröße mit Störgröße und durch das Verhältnis R14/R11 bzw. R24/R21 die Verstärkung der um 180° gedrehten Störgröße bestimmt. Ist wie hier die Verstärkung des aktiven Elements V3 bzw. V4 im Bandpass BP1 bzw. BP2 gleich 1 und sind die Widerstände R10, R11, R12, R13, R20, R21, R22, R23 gleich, tritt die Störgröße am Ausgang von V1 bzw. V2 nicht auf, so daß die angeschlossene Detektionsschaltung D von der Störgröße nicht beeinflußt wird.

Zur Darstellung der Funktionsweise der Detektionsschaltung D ist es erforderlich, kurz auf die Wirkungsweise der Speiseschaltung einzugehen.

Der nicht invertierende Eingang des Differenzverstärkers V1 bzw. V2 liegt an der Referenzspannung $U_r$, deren am Eingang liegendes Potential um einen bestimmten Betrag negativer bzw. positiver als das Potential des geerdeten bzw. negativen Pols der Batteriespannung $U_B$ ist. Der Betrag dieser Referenzspannung $U_r$ ist von der Höhe des Schleifenstromes und der Größe des Referenzwiderstandes R1 bzw. R3 abhängig. Gespeist wird der Differenzverstärker V1 bzw. V2 von der Versorgungsspannung $+ U_{V1}$ und $- U_{V1}$ bzw. $+ U_{V2}$ und $- U_{V2}$. Hierbei ist das Bezugspotential für die Versorgungsspannung von V1 der geerdete positive Pol und für die Versorgungsspannung von V2 der negative Pol der Batteriespannung $U_B$.

Bei offener Schleife fließt zwar kein Schleifenstrom, aber die Speisetransistoren T1, T3 und die Hilfstransistoren T2, T4 sind geöffnet. Über die Widerstände R8, R7 und R9 werden die beiden Hilfstransistoren T2, T4 so vorgespannt, daß die Speisetransistoren T1, T3 durchgeschaltet sind, um beim Schließen der Schleife sofort als Konstantstromquellen arbeiten zu können. Da der am Widerstand R1 bzw. R3 auftretende Spannungsabfall kleiner ist als die zugehörige Referenzspannung $U_r$, werden die Differenzverstärker V1 bzw. V2 ausgangsseitig bis zum « Anschlag » ausgesteuert, d. h. ihre Ausgänge liegen auf einem Potential nahe ihrer Versorgungsspannung. Bei einer Versorgungsspannung von beispielsweise $U_{V1} = 15$ V bezüglich Masse und $U_{V2} = 15$ V bezüglich $- U_B$ liegt das Potential am Ausgang von V1 nahe $- 15$ V bezüglich Masse und das Potential am Ausgang von V2 nahe $+ 15$ V bezüglich $- U_B$. Um in diesem Fall den Kollektor-Basis-Strom von T2 bzw. T4 zu begrenzen, ist zwischen dem Ausgang von V1 bzw. V2 und der Basis von T2 bzw. T4 die Diode D1 bzw. D2 eingefügt.

Wird nun die Schleife geschlossen, d. h. bei einem Fernsprechgerät der Handapparat abgehoben, fließt ein Schleifenstrom. Liefert nun der Speisetransistor T1 einen geringeren Konstantstrom als der Speisetransistor T3, beispielsweise aufgrund der Bauteiletoleranzen, hat T3. die Tendenz, in die Sättigung zu steuern, d. h. die Kollektor-Emitter-Strecke wird niederohmiger und das Potential am Kollektor von T3 negativer. Sowohl über den Widerstand R4 und den vorzugsweise hochohmigen Koppelwiderstand R7 als auch über die Teilnehmerleitung und den Widerstand R2 wird damit das Potential am Emitter von T2 und über R5 an der Basis von T1 negativer. Hierdurch wird T2 und zunächst auch T1 stärker ausgesteuert. Durch die stärkere Aussteuerung von T1 wird aber der Spannungsabfall an R1 größer, wodurch T2 über V1 noch weiter ausgesteuert wird, so daß im stationären Zustand der Speisetransistor T1 wieder seinen ursprünglichen Arbeitspunkt hat und der Stromnebenpfad aus dem Hilfstransistor T2 und dem Widerstand R2 den vollen Ausgleichsstrom, d. h. die Differenz zwischen dem Konstantstrom von T3 und T1, liefert. Im umgekehrten Fall, wenn T1 einen höheren Strom liefert als T3, wird die Stromdifferenz vom anderen Stromnebenpfad, dem Hilfstransistor T4 und dem Widerstand R4, in analoger Weise geliefert. Wenn die Schleife geschlossen ist, also beide Konstantstromquellen Strom führen, arbeiten die Differenzverstärker V1 bzw. V2 im linearen Bereich, d. h. ihre Ausgangsspannung bewegt sich im Bereich des Potentials des geerdeten bzw. negativen Pols der Batteriespannung $U_B$.

Wird bei Erdtastenbetätigung beispielsweise die a-Ader auf Masse gelegt, ist der in der b-Ader liegende Teil der Speiseschaltung stromlos und in der a-Ader fließt der vom Speisetransistor T3 gelieferte Strom. Das bedeutet, daß der Differenzverstärker V2 im linearen Bereich arbeitet und der Differenzverstärker V1 an seinem Aussteuerungsende liegt.

Da also die Ausgänge der beiden Differenzverstärker V1 bzw. V2 je nach Schleifenzustand einen quasi-digitalen Zustand aufweisen, kann mit einer einfach aufgebauten Detektionsschaltung D, beispielsweise einer Logikschaltung, der Schleifenzustand — Schleife offen, Schleife geschlossen, Erdtaste betätigt — direkt der Steuerung St übermittelt werden. Hierzu ordnet man beispielsweise den Potentialen der Ausgänge von V1 bzw. V2 im linearen Arbeitsbereich eine binäre « 0 » und am Aussteuerungsende eine binäre « 1 » zu. Da die eingangs angesprochenen Längsspannungen aber gleichphasig in die a- und b-Ader der Teilnehmerleitung eingekoppelt werden, kann dies ohne Anwendung der erfindungsgemäßen Anordnung, d. h. ohne Ausblendung der Störspannungen am Ausgang von V1 bzw. V2, zu Störungen in der Schleifendetektion führen.

In Fig. 4 ist ein Ausführungsbeispiel der zweiten Lösung gemäß Fig. 2 dargestellt. Die Schaltungsanordnung und Funktionsweise der Leistungsteile L1 und L2, der Differenzverstärker V1 und V2 sowie der Detektionsschaltung D ist dieselbe wie in Fig. 3. Die Unterdrückung der Störgröße am Ausgang von V1 bzw. V2 erfolgt hier durch Bandsperren. Das Ausgangssignal von V1 bzw. V2 wird über gleich große Widerstände R31, R32 bzw. R41, R42 sowohl dem invertierenden als auch dem nicht invertierenden Eingang des Operationsverstärkers V5 bzw. V6 zugeführt. Der Ausgang von V5 bzw. V6 ist über R30 bzw. R40 auf den invertierenden Eingang rückgekoppelt. Der nicht invertierende Eingang von V5 bzw. V6 ist über den aktiven Resonanzkreis Rk1 bzw. Rk2 mit Masse bzw. – $U_B$ verbunden. Diese Resonanzkreise sind für die Frequenz oder den Frequenzbereich der Störgröße durchlässig, so daß diese nach Bezugspotential abgeleitet wird. Sind die Rückkopplungswiderstände R30 und R40 gleich den Widerständen R31, R32 und R41, R42, ist die Verstärkung von V5 und V6 gleich 1 und die Störgröße tritt am Ausgang von V5 und V6 nicht mehr auf, so daß die hier angeschlossene Detektionsschaltung D nicht mehr von der Störgröße beeinflußt wird und auch die Wechselspannungssymmetrie der Teilnehmerschaltung erhöht wird.

Der Resonanzkreis Rk1 bzw. Rk2 besteht im gezeigten Ausführungsbeispiel aus der Kapazität C5 bzw. C6 und einem Gyrator, der aus dem Operationsverstärker V7 bzw. V8, der Kapazität C7 bzw. C8 und den Widerständen R33, R34 bzw. R43 und R44 aufgebaut ist. Falls erforderlich, beispielsweise bei einem größeren Frequenzbereich der Störgröße, können natürlich auch mehrere Resonanzkreise an den nicht invertierenden Eingang von V5 bzw. V6 angeschlossen werden.

**Ansprüche**

1. Teilnehmerschaltung in Fernmelde-, insbesondere Fernsprechanlagen, mit zwei symmetrisch zur Teilnehmerleitung angeordneten Konstantstromquellen, die den Schleifenstrom zur Teilnehmerendeinrichtung (Tln), unabhängig von der Länge der Teilnehmerleitung, konstant halten, wobei die Konstantstromquellen jeweils aus einem Leistungsteil (L1, L2) und einem den Leistungsteil steuernden Differenzverstärker (V1, V2) bestehen, an dessen nicht invertierendem Eingang (+) eine Referenzspannung ($U_r$) anliegt und dessen invertierendem Eingang (−) die Regelgröße, die auch eine Störgröße enthalten kann, zugeführt wird, und wobei die Ausgänge der beiden Differenzverstärker (V1, V2) mit einer Detektionsschaltung (D) verbunden sind, dadurch gekennzeichnet, daß die Ausgangssignale der Differenzverstärker (V1, V2) jeweils über einen Bandpass (BP1, BP2), der für den Frequenzbereich der Störgröße durchlässig ist, und über ein Addierglied (A1, A2), dem invertierenden Eingang (−) der Differenzverstärker (V1, V2) wieder zugeführt werden (Fig. 1).

2. Teilnehmerschaltung in Fernmelde-, insbesondere Fernsprechanlagen mit zwei symmetrisch zur Teilnehmerleitung angeordneten Konstantstromquellen, die den Schleifenstrom zur Teilnehmerendeinrichtung (Tln), unabhängig von der Länge der Teilnehmerleitung, konstant halten, wobei die Konstantstromquellen jeweils aus einem Leistungsteil (L1, L2) und einem den Leistungsteil steuernden Differenzverstärker (V1, V2) bestehen, an dessen nicht invertierendem Eingang (+) eine Referenzspannung ($U_r$) anliegt und dessen invertierendem Eingang (−) die Regelgröße, die auch eine Störgröße enthalten kann, zugeführt wird, und wobei die Ausgänge der beiden Differenzverstärker (V1, V2) mit einer Detektionsschaltung (D) verbunden sind, dadurch gekennzeichnet, daß zwischen den Ausgängen der Differenzverstärker (V1, V2) und den Verbindungspunkten mit der Detektionsschaltung (D) jeweils eine Bandsperre (BS1, BS2) angeordnet ist, die für den Frequenzbereich der Störgröße undurchlässig ist (Fig. 2).

3. Teilnehmerschaltung nach Anspruch 1, dadurch gekennzeichnet, daß die Bandpässe (BP1, BP2) zumindest ein aktives Bauelement (V3, V4) enthalten.

4. Teilnehmerschaltung nach Anspruch 1 oder 3, dadurch gekennzeichnet, daß die Differenzverstärker (V1, V2) mit Widerständen (R10 bis R14, R20 bis R24) derart beschaltet sind, daß sie gleichzeitig als Additionsverstärker dienen, wobei die Verhältnisse der Widerstände zueinander den gegebenen Verstärkungsverhältnissen angepaßt sind.

5. Teilnehmerschaltung nach Anspruch 2, dadurch gekennzeichnet, daß die Bandsperren (BS2, BS2) jeweils aus einer Verstärkerschaltung bestehen, deren Verstärker (V5, V6) das Ausgangssignal des entsprechenden Differenzverstärkers (V1, V2) zugeführt wird, wobei ein Eingang dieses Verstärkers (V5, V6) über mindestens einen aktiven Resonanzkreis (Rk1, Rk2) mit dem jeweiligen Bezugspotential (O, − U$_B$) in Verbindung steht.

6. Teilnehmerschaltung nach Anspruch 5, dadurch gekennzeichnet, daß die Verstärkerschaltung (V5, R30, R31, R32 ; V6, R40, R41, R42) die Verstärkung 1 hat und daß der Resonanzkreis (Rk1, Rk2) an den nicht invertierenden Eingang (+) des Verstärkers (V5, V6) gelegt ist.

## Claims

1. A subscriber circuit in a telecommunication system, more specifically a telephony system, comprising two constant-current sources arranged symmetrically with respect to the subscriber's line and which keep the loop current to the subscriber's station (Tln) constant independent of the length of the subscribers' line, the constant-current sources each being formed by a power supply section (L1, L2) and a differential amplifier (V1, V2) which controls the power supply section and whose non-inverting input (+) is connected to a reference voltage (U) and to whose inverting input (−) the control quantity which may also comprise a spurious component, is applied the outputs of the two differential amplifiers (V1, V2) being connected to a detection circuit (D), characterized in that the output signals of the differential amplifiers (V1, V2) are each applied again to the inverting inputs (−) of the differential amplifiers (V1, V2) via a band-pass filter (BP1, BP2) which allows the frequency range of the spurious component to pass and via an adder arrangement (A1, A2) (Figure 1).

2. A subscriber circuit in a telecommunication system, more specifically a telephony system, comprising two constant-current sources which are arranged symmetrically with respect to the subscriber's line and which keep the loop current to the subscribers station (Tln) constant independent of the length of the subscriber's line, the constant-current sources each being formed by a power supply section (L1, L2) and a differential amplifier (V1, V2) which controls the power supply section and whose non-inverting input (+) is connected to a reference voltage (U$_r$) and to whose inverting input (−) the control quantity which may comprise a spurious component, is applied the outputs of the two differential amplifiers (V1, V2) being connected to a detection circuit (D), characterized in that between the outputs of the differential amplifiers (V1, V2) and the junction points to the detection circuit (D) a band-rejection filter (BS1, BS2) is arranged which does not allow the frequency range of the spurious component to pass (Figure 2).

3. A subscriber circuit as claimed in Claim 1, characterized in that the band-pass filters (BP1, BP2) comprise at least an active component (V3, V4).

4. A subscriber circuit as claimed in Claim 1 or 3, characterized in that the differential amplifiers (V1, V2) are so provided with resistors (R10 to R14, R20 to R24) that they also serve as summing amplifiers, the ratios of the resistors to each other being matched to the predetermined gain ratios.

5. A subscriber circuit as claimed in Claim 2, characterized in that the band-rejection filters (BS1, BS2) are each formed by an amplifier circuit to whose amplifiers (V5, V6) the output signal of the corresponding differential amplifiers (V1, V2) is applied, an input of each of these amplifiers (V5, V6) being connected to the prevailing reference potential (O, − U$_B$) via at least one active resonant circuit (Rk1, Rk2).

6. A subscriber circuit as claimed in Claim 5, characterized in that the amplifier circuit (V5, R30, R31, R32 ; V6, R40, R41, R42) has a gain equal to unity and that the resonant circuit (Rk1, Rk2) is connected to the non-inverting input (+) of the amplifier (V5, V6).

## Revendications

1. Circuit d'abonné dans des installations de télécommunication, en particulier de téléphonie, comportant deux sources de courant constant disposées symétriquement par rapport à la ligne d'abonné, qui maintiennent constant le courant de boucle vers le terminal d'abonné (Tln) indépendamment de la longueur de la ligne d'abonné, les sources de courant constant étant formées chacune d'une section de puissance (L1, L2) et d'un amplificateur de différence (V1, V2) commandant la section de puissance, son entrée non inverseuse (+) recevant une tension de référence (U$_r$) et son entrée inverseuse (−) recevant la grandeur de régulation qui peut aussi contenir une grandeur perturbatrice, et les sorties des deux amplificateurs de différence (V1, V2) étant connectées à un circuit de détection (D), caractérisé en ce que les signaux de sortie des amplificateurs de différence (V1, V2) sont ramenés, chaque fois par l'intermédiaire d'un filtre passe-bande (BP1, BP2) qui est passant pour le domaine de fréquence de la grandeur perturbatrice et par l'intermédiaire d'un élément additionneur (A1, A2) à l'entrée inverseuse (−) de l'amplificateur de différence (V1, V2) (Fig. 1).

2. Circuit d'abonné dans des installations de télécommunication, en particulier de téléphonie, comportant deux sources de courant constant disposées symétriquement par rapport à la ligne d'abonné, qui maintiennent constant le courant de boucle vers le terminal d'abonné (Tln), indépendant de la longueur de la ligne d'abonné, les sources de courant constant étant formées chacune d'une section de puissance (L1, L2) et d'un amplificateur de différence (V1, V2) commandant la section de puissance, son entrée non inverseuse (+) recevant une tension de référence (U$_r$) et son entrée inverseuse (−) recevant la grandeur de régulation qui peut aussi contenir une grandeur perturbatrice, et les sorties des deux amplificateurs de différence (V1, V2) étant connectées à un circuit de détection (D), caractérisé en ce qu'entre les sorties des amplificateurs de différence (V1, V2) et les points de connexion avec le circuit de détection (D), est chaque fois monté un filtre à élimination de bande (BS1, BS2) qui est bloquant pour le domaine de fréquence de la grandeur perturbatrice (Fig. 2).

3. Circuit d'abonné suivant la revendication 1, caractérisé en ce que les filtres passe-bande (BP1, BP2) contiennent au moins un composant actif (V3, V4).

4. Circuit d'abonné suivant la revendication 1 ou 3, caractérisé en ce que les amplificateurs de différence (V1, V2) sont équipés de résistances (R10 à R14, R20 à R24) de manière à servir simultanément d'amplificateurs d'addition, les rapports des résistances entre elles étant adaptés aux rapports d'amplification donnés.

5. Circuit d'abonné suivant la revendication 2, caractérisé en ce que les filtres à élimination de bande (BS1, BS2) sont chaque fois formés d'un circuit d'amplification dont les amplificateurs (V5, V6) reçoivent le signal de sortie de l'amplificateur de différence (V1, V2) correspondant, une entrée de cet amplificateur (V5, V6) étant connectée par l'intermédiaire d'au moins un circuit de résonance actif (Rk1, Rk2), au potentiel de référence (O, − U$_B$) en question.

6. Circuit d'abonné suivant la revendication 5, caractérisé en ce que le circuit d'amplification (V5, R30, R31, R32 ; V6, R40, R41, R42) a un coefficient d'amplification (1) et le circuit de résonance (RK1, Rk2) est connecté à l'entrée non inverseuse (+) de l'amplificateur (V5, V6).

0 057 840

Fig. 1

Fig. 2

1

0 057 840

Fig.3

Fig.4